# EUROPEAN PATENT APPLICATION

(11) **EP 4 783 506 A1**
(43) Date of publication of application: **29.07.2026**
(21) Application number: 23952611.4
(22) Date of filing: 20.09.2023
(51) Int. Cl.: H04L 5/00, H04L 1/1812, H04W 76/28

(54) **COMMUNICATION PROCESSING METHOD, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/120208
(87) International publication number: WO 2025/059952

(57) **Abstract**

Embodiments of the present disclosure provide a communication processing method, a terminal, a network device, a communication system, and a storage medium. The method comprises: on the basis of first downlink information corresponding to a first HARQ-ACK codebook, a terminal determines whether to send the first HARQ-ACK codebook to a network device, wherein the first downlink information comprises a first SPS PDSCH, and the first SPS PDSCH includes one or more SPS PDSCHs of which time domain positions are within a cell DTX inactive period. In the method of the present disclosure, on the basis of an inclusion relationship between the first downlink information and the first SPS PDSCH, the terminal determines whether to send the first HARQ-ACK codebook corresponding to the first downlink information, that is, a first HARQ-ACK codebook comprising HARQ-ACK feedback information of the first downlink information, such that when the first SPS PDSCH is within the cell DTX inactive period of the network device, the terminal can reasonably adjust the sending mode of the related first HARQ-ACK codebook so as to perform reasonable receiving/sending behaviors in the energy-saving period of the network device.

## Description

### TECHNICAL FIELD

The present disclosure relates to the technical field of communication, and in particular, to a communication processing method, a terminal, a network device, a communication system and a storage medium.

### BACKGROUND

In network energy saving, one energy saving manner is discontinuous transmission (DTX) of cell base stations, or called DTX in a cell (cell DTX). In the DTX in a cell mechanism, the network device can not send some downlink information to achieve energy saving.

### SUMMARY

When DTX in a cell is applied in the network device, the relevant receiving and sending behaviors of the terminal need to be determined or defined.

Embodiments of the present disclosure provide a communication processing method, a terminal, a network device, a communication system, and a storage medium.

In a first aspect, an embodiment of the present disclosure provides a communication processing method, the method including:
determining, by a terminal, according to first downlink information corresponding to a first hybrid automatic repeat request ACK (HARQ-ACK) codebook, whether to send the first HARQ-ACK codebook to a network device;
where the first downlink information includes first semi-persistent scheduling physical downlink shared channel (SPS PDSCH), and the first SPS PDSCH includes one or more SPS PDSCHs whose time domain locations are located within a discontinuous transmission (cell DTX) inactive period in a cell.

In a second aspect, an embodiment of the present disclosure provides a communication processing method, the method including:
determining, by a network device, according to first downlink information corresponding to a first HARQ-ACK codebook, whether to receive the first HARQ-ACK codebook sent by a terminal;
where the first downlink information includes a first SPS PDSCH, and the first SPS PDSCH includes one or more SPS PDSCHs whose time domain locations are located within a DTX inactive period in a cell.

In a third aspect, an embodiment of the present disclosure provides a terminal, including:
a processing module, configured to, according to first downlink information corresponding to a first hybrid automatic repeat request acknowledge (HARQ-ACK) codebook, determine whether to send the first HARQ-ACK codebook to a network device;
where the first downlink information includes first semi-persistent scheduling physical downlink shared channel (SPS PDSCH), and the first SPS PDSCH includes one or more SPS PDSCHs whose time domain locations are located within a discontinuous transmission (cell DTX) inactive period in a cell.

In a fourth aspect, an embodiment of the present disclosure provides a network device, including:
a processing module, configured to determine, according to first downlink information corresponding to a first HARQ-ACK codebook, whether to receive the first HARQ-ACK codebook sent by a terminal;
where the first downlink information includes a first SPS PDSCH, and the first SPS PDSCH includes one or more SPS PDSCHs whose time domain locations are located within a DTX inactive period in a cell.

In a fifth aspect, an embodiment of the present disclosure provides a terminal, including:
a memory;
one or more processors; and
a computer program stored in the memory and executable on the processor, where the processor implements the communication processing method described in the first aspect when executing the computer program.

In a sixth aspect, an embodiment of the present disclosure provides a network device, including:
a memory;
one or more processors; and
a computer program stored in the memory and executable on the processor, where the processor implements the communication processing method described in the second aspect when executing the computer program.

In a seventh aspect, the present disclosure discloses a communication system, including a terminal and a network device, where:
the terminal is configured to implement the communication processing method described in the first aspect; and
the network device is configured to implement the communication processing method described in the second aspect.

In an eighth aspect, an embodiment of the present disclosure provides a storage medium, where the storage medium stores instructions, where:
when the instructions are executed on a communication device, the communication device is caused to execute the method described in any item of the first aspect or any item of the second aspect.

### BRIEF DESCRIPTION OF THE DRAWINGS

In order to more clearly illustrate the technical solutions in the embodiments of the present disclosure, the drawings required for describing the embodiments are introduced below. The following drawings are only some embodiments of the present disclosure and do not impose specific limitations on the protection scope of the present disclosure.
FIG. 1 is an exemplary schematic diagram of an architecture of a communication system provided according to an embodiment of the present disclosure;
FIGs. 2a to 2c are exemplary interaction diagrams of a method provided according to embodiments of the present disclosure;
FIGs. 3a to 3c are schematic flow diagrams of a method performed by a terminal according to embodiments of the present disclosure;
FIGs. 4a to 4c are flowchart diagrams of a method performed by a network device according to an embodiment of the present disclosure;
FIG. 5a is a schematic diagram of a structure of a terminal according to an embodiment of the present disclosure;
FIG. 5b is a schematic diagram of a structure of a network device according to an embodiment of the present disclosure;
FIG. 6a is a schematic diagram of a communication device according to an embodiment of the present disclosure;
FIG. 6b is a schematic diagram of a communication device according to an embodiment of the present disclosure.

### DETAILED DESCRIPTION

Embodiments of the present disclosure provide a communication processing method, a terminal, a network device, a communication system, and a storage medium.

In a first aspect, an embodiment of the present disclosure provides a communication processing method, the method including: a terminal determining, according to first downlink information corresponding to a first HARQ-ACK codebook, whether to send the first HARQ-ACK codebook to a network device;
where the first downlink information includes a first SPS PDSCH, and the first SPS PDSCH includes one or more SPS PDSCHs whose time domain locations are located in a discontinuous transmission (cell DTX) inactive period in a cell.

In the above embodiment, the terminal determines whether to send the first HARQ-ACK codebook corresponding to the first downlink information, that is, the first HARQ-ACK codebook including the HARQ-ACK feedback information of the first downlink information, according to the inclusion relationship between the first downlink information and the first SPS PDSCH. Therefore, when the first SPS PDSCH is located in the DTX inactive period in the cell of the network device, the terminal can reasonably adjust the sending manner of the relevant first HARQ-ACK codebook to perform reasonable sending and receiving behaviors during the energy-saving period of the network device.

In combination with some embodiments of the first aspect, in some embodiments, the terminal determining, according to first downlink information corresponding to the first HARQ-ACK codebook, whether to send the first HARQ-ACK codebook to the network device, includes:
the first downlink information only includes the first SPS PDSCH, the terminal does not send the first HARQ-ACK codebook to the network device.

In the above embodiment, when the first downlink information only includes the first SPS PDSCH, the first HARQ-ACK codebook only includes the HARQ-ACK feedback information corresponding to the first SPS PDSCH. During the DTX inactive period in the cell, the network device does not send the first SPS PDSCH, so that the terminal does not send the first HARQ-ACK codebook to achieve energy saving of the terminal.

In combination with some embodiments of the first aspect, in some embodiments, the time domain location of the channel containing the first HARQ-ACK codebook is located within the discontinuous transmission (DTX) inactive period in the cell.

In the above embodiment, if the time domain location of the channel containing the first HARQ-ACK codebook is within the inactive period of DRX in the cell, the network device may not receive part of the uplink information. When the first HARQ-ACK codebook only includes the HARQ-ACK feedback information corresponding to the first SPS PDSCH, the terminal may not send the first HARQ-ACK codebook.

In combination with some embodiments of the first aspect, in some embodiments, the terminal determining, according to first downlink information corresponding to the first HARQ-ACK codebook, whether to send the first HARQ-ACK codebook to the network device, includes:
the first downlink information only includes the first SPS PDSCH, and the time domain location of the channel containing the first HARQ-ACK codebook overlaps with the time domain location of a first uplink channel, the terminal multiplexes the first HARQ-ACK codebook with information of the first uplink channel and sends the multiplexed information to the network device;
where all HARQ-ACK feedback information included in the first HARQ-ACK codebook is a default value.

In the above embodiment, when the first downlink information only includes the first SPS PDSCH, if the first HARQ-ACK codebook has a time domain conflict with other uplink channel(s), the terminal can multiplex the first HARQ-ACK codebook with the information of other uplink channel(s), and assign the HARQ-ACK feedback information in the first HARQ-ACK codebook as a default value, thereby multiplexing and sending the first HARQ-ACK codebook in the scenario of time domain conflict, and facilitating the network device to demodulate other information or evaluate other information using the known default value.

In combination with some embodiments of the first aspect, in some embodiments, the terminal determining, according to first downlink information corresponding to the first HARQ-ACK codebook, whether to send the first HARQ-ACK codebook to the network device, includes:
the first downlink information only includes the first SPS PDSCH, and the time domain location of the channel containing the first HARQ-ACK codebook overlaps with the time domain location of the first uplink channel, the terminal does not multiplex the first HARQ-ACK codebook with information of the first uplink channel, and does not send the first HARQ-ACK codebook to the network device.

In the above embodiment, when the first downlink information only includes the first SPS PDSCH, if the first HARQ-ACK codebook conflicts with other uplink channel(s) in the time domain, the terminal may not multiplex the first HARQ-ACK codebook and may not send the first HARQ-ACK codebook, to save information resources.

In combination with some embodiments of the first aspect, in some embodiments, the terminal determining, according to first downlink information corresponding to the first HARQ-ACK codebook, whether to send the first HARQ-ACK codebook to the network device, includes:
the first downlink information includes the first SPS PDSCH and second downlink information, the terminal sends the first HARQ-ACK codebook to the network device.

In the above embodiment, the first downlink information includes more than the first SPS PDSCH, that is, the first HARQ-ACK codebook includes the HARQ-ACK feedback information corresponding to the first SPS PDSCH and the HARQ-ACK feedback information of the second downlink information. When the first SPS PDSCH is within the DTX inactive period in a cell, the terminal can send the first HARQ-ACK codebook so that the network device can receive the corresponding feedback information in time, unnecessary retransmission of the second downlink information is avoided, and reasonable scheduling is facilitated.

In combination with some embodiments of the first aspect, in some embodiments, all HARQ-ACK feedback information corresponding to the first SPS PDSCH in the first HARQ-ACK codebook is a default value.

In the above embodiment, the HARQ-ACK feedback information corresponding to the first SPS PDSCH is a default value, which is convenient for the network device to demodulate other information or evaluate other information using a known default value; it is also beneficial to keep the size of the HARQ-ACK codebook fixed, so that the UE can use a Type 1 HARQ-ACK codebook or a Type 3 HARQ-ACK codebook to send HARQ-ACK feedback information.

In combination with some embodiments of the first aspect, in some embodiments, all HARQ-ACK feedback information corresponding to the first SPS PDSCH in the first HARQ-ACK codebook is eliminated, where the first HARQ-ACK codebook type is a Type 2 HARQ-ACK codebook.

In the above embodiment, the terminal combines the first HARQ-ACK codebook of Type 2 HARQ-ACK type, removes all HARQ-ACK feedback information corresponding to the first SPS PDSCH and then reports it, which is beneficial to saving information resources occupied by the first HARQ-ACK codebook.

In combination with some embodiments of the first aspect, in some embodiments, the time domain location of the channel containing the first HARQ-ACK codebook is located within the inactive period of DRX in the cell.

In the above embodiment, when the first downlink information includes not only the first SPS PDSCH, even if the time domain location corresponding to the first HARQ-ACK codebook is within the inactive period of DRX, the terminal still sends the first HARQ-ACK codebook so that the network device can receive the HARQ-ACK feedback of the relevant channel in time.

In combination with some embodiments of the first aspect, in some embodiments, the terminal sending a first HARQ-ACK codebook to the network device, includes:
the time domain location of the channel containing the first HARQ-ACK codebook overlaps with the time domain location of the first uplink channel, the terminal multiplexes the first HARQ-ACK codebook with the information of the first uplink channel, and sends the multiplexed information to the network device.

In the above embodiment, the terminal can send the first HARQ-ACK codebook in a multiplexing manner, and multiplex the first HARQ-ACK codebook with the information that conflicts with it in the time domain, to save time domain resources.

In combination with some embodiments of the first aspect, in some embodiments, the second downlink information includes at least one of the following:
one or more SPS PDSCHs located outside the inactive period in time domain;
dynamically scheduled physical downlink shared channel (PDSCH);
downlink control information (DCI) requiring HARQ-ACK feedback.

In the above embodiment, the second downlink information may be a related channel that requires HARQ-ACK feedback information. When the first downlink information includes such a channel, the terminal can send the first HARQ-ACK codebook even if the first SPS PDSCH is located in the DTX inactive period.

In combination with some embodiments of the first aspect, in some embodiments, the first uplink channel includes at least one of the following:
a channel for transmitting a scheduling request (SR);
a channel for transmitting a channel state information (CSI) report;
a dynamically scheduled physical uplink shared channel (PUSCH);
a configured grant physical uplink shared channel (CG-PUSCH).

In the above embodiment, an uplink channel that may have a time domain conflict with the first HARQ-ACK codebook is illustrated, so that when a time domain conflict occurs, the terminal can use a reasonable manner to send different information that has a time domain conflict.

In combination with some embodiments of the first aspect, in some embodiments, the default value is acknowledgment (ACK) or negative acknowledgment (NACK).

In the above embodiments, the default value is defined or configured so that the terminal and the network device can communicate using the same default value, so that the network device can demodulate or evaluate other information sent together with the default value using the default value.

In a second aspect, an embodiment of the present disclosure provides a communication processing method, the method including:
a network device determining, according to first downlink information corresponding to a first HARQ-ACK codebook, whether to receive the first HARQ-ACK codebook sent by a terminal;
where the first downlink information includes a first SPS PDSCH, and the first SPS PDSCH includes one or more SPS PDSCHs whose time domain locations are located within a DTX inactive period in a cell.

In the above embodiment, the network device determines whether to receive the first HARQ-ACK codebook corresponding to the first downlink information, that is, the first HARQ-ACK codebook including the HARQ-ACK feedback information of the first downlink information, according to the inclusion relationship between the first downlink information and the first SPS PDSCH, so that when the first SPS PDSCH is located in the DTX inactive period in a cell of the network device, the network device can reasonably adjust the reception manner of the relevant first HARQ-ACK codebook.

In combination with some embodiments of the second aspect, in some embodiments, the network device determining, according to the first downlink information corresponding to the first HARQ-ACK codebook, whether to receive the first HARQ-ACK codebook sent by the terminal, includes:
the first downlink information only includes the first SPS PDSCH, the network device does not receive the first HARQ-ACK codebook sent by the terminal.

In combination with some embodiments of the second aspect, in some embodiments, the time domain location of the channel containing the first HARQ-ACK codebook is located within the inactive period of DRX in the cell.

In combination with some embodiments of the second aspect, in some embodiments, the network device determining, according to the first downlink information corresponding to the first HARQ-ACK codebook, whether to receive the first HARQ-ACK codebook sent by the terminal, includes:
the first downlink information only includes the first SPS PDSCH, and the time domain location of the channel containing the first HARQ-ACK codebook overlaps with the time domain location of the first uplink channel, the network device receives information obtained after the terminal multiplexes the first HARQ-ACK codebook with the information of the first uplink channel;
where all HARQ-ACK feedback information included in the first HARQ-ACK codebook is a default value.

In combination with some embodiments of the second aspect, in some embodiments, the network device determining, according to the first downlink information corresponding to the first HARQ-ACK codebook, whether to receive the first HARQ-ACK codebook sent by the terminal, includes:
the first downlink information only includes the first SPS PDSCH, and the time domain location of the channel containing the first HARQ-ACK codebook overlaps with the time domain location of the first uplink channel, the network device does not receive the first HARQ-ACK codebook.

In combination with some embodiments of the second aspect, in some embodiments, the network device determining, according to the first downlink information corresponding to the first HARQ-ACK codebook, whether to receive the first HARQ-ACK codebook sent by the terminal, includes:
the first downlink information includes the first SPS PDSCH and second downlink information, the network device receives the first HARQ-ACK codebook sent by the terminal.

In combination with some embodiments of the second aspect, in some embodiments, all HARQ-ACK feedback information corresponding to the first SPS PDSCH in the first HARQ-ACK codebook is a default value.

In combination with some embodiments of the second aspect, in some embodiments, all HARQ-ACK feedback information corresponding to the first SPS PDSCH in the first HARQ-ACK codebook is eliminated, where a type of the first HARQ-ACK codebook is a type 2 HARQ-ACK codebook.

In combination with some embodiments of the second aspect, in some embodiments, the time domain location of the channel containing the first HARQ-ACK codebook is located within the inactive period of DRX in the cell.

In combination with some embodiments of the second aspect, in some embodiments, the network device receiving the first HARQ-ACK codebook sent by the terminal, includes:

the time domain location of the channel containing the first HARQ-ACK codebook overlaps with the time domain location of the first uplink channel, the network device receives information obtained after the terminal multiplexes the first HARQ-ACK codebook with the information of the first uplink channel.

In combination with some embodiments of the second aspect, in some embodiments, the second downlink information includes at least one of the following:
one or more SPS PDSCHs located outside the inactive period in time domain;
a dynamically scheduled PDSCH;
DCI requiring HARQ-ACK feedback.

In combination with some embodiments of the second aspect, in some embodiments, the first uplink channel includes at least one of the following:
a channel for transmitting an SR;
a channel for transmitting a CSI report;
a dynamically scheduled PUSCH;
a CG-PUSCH.

In combination with some embodiments of the second aspect, in some embodiments, the default value is ACK or NACK.

In a third aspect, an embodiment of the present disclosure provides a terminal, including:
a processing module, configured to, according to first downlink information corresponding to a first hybrid automatic repeat request acknowledge (HARQ-ACK) codebook, determine whether to send the first HARQ-ACK codebook to a network device;
where the first downlink information includes a first semi-persistent scheduling physical downlink shared channel (SPS PDSCH), and the first SPS PDSCH includes one or more SPS PDSCHs whose time domain locations are located in a discontinuous transmission (cell DTX) inactive period in a cell.

In a fourth aspect, an embodiment of the present disclosure provides a network device, including:
a processing module, configured to determine, according to first downlink information corresponding to a first HARQ-ACK codebook, whether to receive the first HARQ-ACK codebook sent by a terminal;
where the first downlink information includes a first SPS PDSCH, and the first SPS PDSCH includes one or more SPS PDSCHs whose time domain locations are located in a DTX inactive period in a cell.

Embodiments of the present disclosure provide a communication processing method, a terminal, a network device, a communication system, and a storage medium.

In some embodiments, terms such as communication processing method, information processing method, communication method, etc. can be replaced with each other, terms such as communication processing apparatus, information processing apparatus, communication apparatus, etc. can be replaced with each other, and terms such as information processing system, communication system, etc. can be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English in translation, the noun after the article may be understood as a singular expression or a plural expression.

In the embodiments of the present disclosure, "a plurality of" refers to two or more.

In some embodiments, terms such as "at least one of", "one or more", "a plurality of', "multiple" and the like can be used interchangeably.

In some embodiments, the recording manners of "at least one of A and B", "A and/or B", "A in one case, B in another case", " A in response to one case, B in response to another case", etc., may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also similar.

In some embodiments, the recording manner of "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also similar.

The prefixes such as "first" and "second" in the embodiments of the present disclosure are only used to distinguish different description objects, and do not constitute restrictions on the location, order, priority, quantity or content of the description objects. The statement of the description object refers to the description in the context of the claims or embodiments, and should not constitute redundant restrictions due to the use of prefixes. For example, if the description object is a "field", the ordinal numbers before the "field" in the "first field" and the "second field" do not limit the location or order between the "fields", and the "first" and "second" do not limit whether the "fields" they modify are in the same message, nor do they limit the order of the "first field" and the "second field". For another example, if the description object is a "level", the ordinal numbers before the "level" in the "first level" and the "second level" do not limit the priority between the "levels". For another example, the number of description objects is not limited by the ordinal number, and can be one or more. Taking the "first apparatus" as an example, the number of "apparatuses" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, terms such as "time/frequency", "time/frequency domain", etc. refer to the time domain and/or the frequency domain.

In some embodiments, terms such as "in response to...", "in response to determining...", "in the case of...", "at the time of...", "when...", "if...", "in a case...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatus and device can be interpreted as physical or virtual, and their names are not limited to the names described in the embodiments. In some cases, they may also be understood as "equipment", "device", "circuit", "network element", "node", "function", "unit", "section", "system", "network", "chip", "chip system", "entity", "subject", etc.

In some embodiments, "network" can be interpreted as apparatuses included in the network, such as an access network device, a core network device, etc.

In some embodiments, in some embodiments, the terms "access network device (AN device), "radio access network device (RAN device)", "base station (BS)", "radio base station", "fixed station", "node", "access point", "transmission point (TP)", "reception point (RP)", "transmission and/or reception point (transmission/reception point, TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like can be used interchangeably.

In some embodiments, the terms "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like can be used interchangeably.

In some embodiments, the access network device, the core network device, or the network device can be replaced by the terminal. For example, the various embodiments of the present disclosure can also be applied to a structure in which the communication between the access network device, the core network device, or the network device and the terminal is replaced by the communication between multiple terminals (for example, device-to-device (D2D), vehicle-to-everything (V2X), etc.). In this case, it can also be set as a structure in which the terminal has all or part of the functions of the access network device. In addition, terms such as "uplink" and "downlink" can also be replaced by terms corresponding to communication between terminals (for example, "side"). For example, uplink channels, downlink channels, etc. can be replaced by side channels, and uplinks, downlinks, etc. can be replaced by side links.

In some embodiments, the terminal can be replaced by an access network device, a core network device, or a network device. In this case, the access network device, the core network device, or the network device can also be configured to have a structure that has all or part of the functions of the terminal.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure can be implemented as an independent embodiment, and the combination of any elements, any rows, or any columns can also be implemented as an independent embodiment.

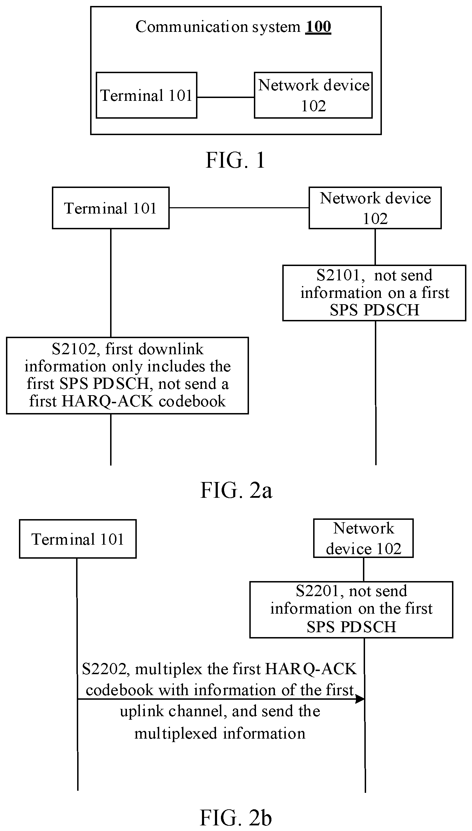

FIG. 1 is a schematic diagram of an architecture of a communication system according to an embodiment of the present disclosure.

As shown in FIG. 1, the communication system 100 includes a terminal 101 and a network device 102.

In some embodiments, the terminal 101 includes at least one of, for example, a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include at least one of an access network device and a core network device.

In some embodiments, the access network device is, for example, a node or device that accesses a terminal to a wireless network. The access network device may include at least one of an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a wireless fidelity (WiFi) system, but not limited thereto.

In some embodiments, the technical solution of the present disclosure may be applicable to the Open RAN architecture. In this case, the interfaces between access network devices or within access network devices involved in the embodiments of the present disclosure may become internal interfaces of Open RAN, and the processes and information interactions between these internal interfaces may be implemented through software or programs.

In some embodiments, the access network device may be composed of a central unit (CU) and a distributed unit (DU), where the CU may also be called a control unit. The CU-DU structure may be used to split the protocol layer of the access network device, with some functions of the protocol layer being centrally controlled by the CU, and the remaining part or all of the functions of the protocol layer being distributed in the DU, and the DU being centrally controlled by the CU, but not limited thereto.

In some embodiments, the core network device may be a device including one or more network elements, or may be multiple devices or device groups, each including all or part of one or more network elements. The network element may be virtual or physical. The core network may include, for example, at least one of an Evolved Packet Core (EPC), a 5G Core Network (5GCN), and a Next Generation Core (NGC).

It can be understood that the communication system described in the embodiments of the present disclosure is for the purpose of more clearly illustrating the technical solutions of the embodiments of the present disclosure, and does not constitute a limitation on the technical solutions provided by the embodiments of the present disclosure. A person skilled in the art can know that with the evolution of the system architecture and the emergence of new service scenarios, the technical solutions provided by the embodiments of the present disclosure are also applicable to similar technical problems.

The following embodiments of the present disclosure may be applied to the communication system 100 shown in FIG. 1, or part of the subject, but are not limited thereto. The subjects shown in FIG. 1 are examples, and the communication system may include all or part of the subjects in FIG. 1, or may include other subjects other than FIG. 1, and the number and form of the subjects are arbitrary, the connection relationship between the subjects is an example, the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device to Device (D2D) system, Machine to Machine (M2M) system, Internet of Things (IoT) system, Vehicle to Everything (V2X), systems using other communication methods, and next-generation systems expanded based on them. In addition, a combination of multiple systems (for example, a combination of LTE or LTE-A with 5G, etc.) can also be applied.

In the embodiments of the present disclosure, when the network device 102 applies the DTX mechanism, such as during the DTX inactive period in a cell, the network device 102 does not send data or information on the SPS PDSCH, and a manner for the terminal 101 to perform HARQ-ACK feedback on the SPS PDSCH needs to be solved.

FIG. 2a is an interactive schematic diagram of a communication processing method according to an embodiment of the present disclosure. As shown in FIG. 2a, an embodiment of the present disclosure relates to a communication processing method, and the method includes the following steps.

**In step S2101,** the network device 102 does not send information on a first SPS PDSCH.

In some embodiments, the first SPS PDSCH includes one or more SPS PDSCHs whose time domain locations are within a DTX inactive period in a cell.

Optionally, the first SPS PDSCH may include multiple SPS PDSCHs, and the time domain locations of the multiple SPS PDSCHs are all located within the DTX inactive period in a cell.

In some embodiments, in the DTX inactive period in a cell, the network device 102 may be in a non-activation state (non-active) on the cell or the carrier, and not send part or all of the downlink channels or downlink signals to achieve energy saving. The inactive period may include a DTX-off period, a sleep period, or a first period, etc. In a DTX active period in a cell, the network device 102 is within an activation state (active) on the cell or the carrier, and can send downlink channels or downlink signals normally. The active period may include a DTX-on period, a working period, or a second period, etc.

Optionally, the network device 102 may dynamically indicate to the terminal 101 a time domain parameter of the non-periodic DTX inactive period or active period.

Optionally, the network device 102 may send corresponding configuration information to the terminal 101 to configure the periodic DTX mode in a cell (cell DTX on-off pattern). One DTX cycle may include a DTX-off period and a DTX-on period.

In some embodiments, the network device 102 may configure a periodic SPS PDSCH for transmitting downlink data for the terminal 101 through high-level signaling. After the SPS PDSCH is activated, data can be periodically sent through the SPS PDSCH until the SPS PDSCH is deactivated or deconfigured.

Optionally, for each SPS PDSCH, the terminal 101 needs to perform HARQ-ACK feedback to inform the network device 102 of the demodulation status of the SPS PDSCH.

Optionally, during the DTX inactive period in a cell, the network device 102 does not send data on the SPS PDSCH channel.

In **step S2102,** the first downlink information only includes the first SPS PDSCH, the terminal 101 does not send a first HARQ-ACK codebook to the network device 102.

In some embodiments, the first downlink information is a channel corresponding to the first HARQ-ACK codebook, that is, the first HARQ-ACK codebook includes HARQ-ACK feedback information corresponding to the first downlink information.

In some embodiments, when the first downlink information only includes the first SPS PDSCH, the first HARQ-ACK codebook only includes the HARQ-ACK feedback information corresponding to the first SPS PDSCH, such as the HARQ-ACK feedback information corresponding to one or more SPS PDSCHs whose time domain locations are located in the DTX inactive period in a cell.

In this embodiment, since the network device 102 does not send the SPS PDSCH during the DTX inactive period in a cell, the terminal 101 does not send the first HARQ-ACK codebook, that is, does not send the HARQ-ACK feedback information corresponding to the first SPS PDSCH in the inactive period, to save the energy consumption of the terminal 101.

In some embodiments, the time domain location of the channel containing the first HARQ-ACK codebook is located within a discontinuous transmission (DTX) inactive period in a cell.

Optionally, during the inactive period of DRX in the cell, the network device 102 is within a non-active state on the cell or carrier, and may not receive part or all of the uplink channels or uplink signals.

Optionally, in a scenario where the first downlink information only includes the first SPS PDSCH, if the time domain location of the channel containing the first HARQ-ACK codebook is within the inactive period of DRX in the cell, the terminal 101 does not send the first HARQ-ACK codebook.

Optionally, if the time domain location of the channel containing the first HARQ-ACK codebook is within the inactive period of DRX in the cell, or the network device 102 is not configured with the DRX in the cell, the terminal 101 still needs to send the first HARQ-ACK codebook.

In some embodiments, when the time domain location of the channel containing the first HARQ-ACK codebook overlaps with the time domain location of the first uplink channel, the terminal 101 does not send the first HARQ-ACK codebook to the network device 102. The terminal 101 does not multiplex the first HARQ-ACK codebook with the information of the first uplink channel.

Optionally, when there is a time domain conflict between different uplink channels, the terminal 101 can multiplex information of different uplink channels in a multiplexing manner and then send the multiplexed information.

Optionally, when the first downlink information only includes the first SPS PDSCH, if the time domain location of the channel containing the first HARQ-ACK codebook overlaps with the time domain location of the first uplink channel, the terminal 101 considers that the first HARQ-ACK codebook does not exist and does not multiplex the first HARQ-ACK codebook with information of other uplink channel(s), that is, the first HARQ-ACK codebook is removed from the process of multiplexing the information of the uplink channel(s).

Optionally, the first uplink channel includes at least one of the following:
a channel for transmitting an SR;
a channel for transmitting a CSI report;
a dynamically scheduled PUSCH;
a CG-PUSCH.

In some embodiments, the network device 102 does not receive the first HARQ-ACK codebook.

In some embodiments, the names of information, etc. are not limited to the names recorded in the embodiments, and terms such as "information", "message", "signal", "signaling", "report", "configuration", "indication", "instruction", "command", "channel", "parameter", "domain", and "field" can be used interchangeably.

In some embodiments, "acquire", "obtain", "get", "receive", "transmit", "bidirectional transmission", "send and/or receive" can be interchangeable, which can be interpreted as receiving from other entities, obtaining from protocols, obtaining from high levels, obtaining by self-processing, autonomous implementation, etc.

In some embodiments, terms such as "send", "emit", "report", "deliver", "transmit", "bidirectional transmission", "send and/or receive" can be used interchangeably.

In some embodiments, the terms "radio", "wireless", "radio access network (RAN)", "access network (AN)", "RAN-based", etc. may be used interchangeably.

In some embodiments, terms such as "synchronization signal (SS)", "synchronization signal block (SSB)", "reference signal (RS)", "pilot", and "pilot signal" can be used interchangeably.

In some embodiments, terms such as "moment", "time point", "time", and "time location" can be interchangeable, and terms such as "duration", "period", "time window", "window", and "time" can be interchangeable.

In some embodiments, terms such as "component carrier (CC)", "cell", "frequency carrier", and "carrier frequency" can be used interchangeably.

In some embodiments, terms such as "certain", "preseted", "preset", "set", "indicated", "some", "any", and "first" can be interchangeable, and "specific A", "preset A", "predetermined A", "set A", "indicated A", "some A", "any A", and "first A" can be interpreted as A pre-defined in a protocol, etc., or as A obtained through setting, configuration, or indication, etc., and can also be interpreted as specific A, some A, any A, or first A, etc., but is not limited thereto.

In some embodiments, the determination or judgment can be performed by a value (0 or 1) represented by 1 bit, by a true or false value (Boolean value) represented by true or false, or by comparison of numerical values (for example, comparison with a predetermined value), but is not limited thereto.

In some embodiments, "not expecting to receive" can be interpreted as not receiving on the time domain resource and/or frequency domain resource, or as not performing subsequent processing on the data after receiving the data; "not expecting to send" can be interpreted as not sending, or as sending but not expecting the recipient to respond to the sent content.

The method involved in the embodiments of the present disclosure may include at least one of step S2101 to step S2102. For example, step S2102 can be implemented as an independent embodiment, but is not limited thereto.

In some embodiments, reference may be made to other optional implementations recorded before or after the specification corresponding to FIG. 2a.

FIG. 2b is an interactive schematic diagram of a communication processing method according to an embodiment of the present disclosure. As shown in FIG. 2a, an embodiment of the present disclosure relates to a communication processing method, and the method includes the following steps.

In **step S2201,** the network device 102 does not send information on the first SPS PDSCH.

Optionally, optional implementations of step S2201 may refer to step S2101 in FIG. 2a and other related parts of the embodiment involved in FIG. 2a, which will not be described in detail here.

In **step S2202,** the first downlink information only includes the first SPS PDSCH, and the time domain location of the channel containing the first HARQ-ACK codebook overlaps with the time domain location of the first uplink channel, the terminal 101 multiplexes the first HARQ-ACK codebook with the information of the first uplink channel, and sends the multiplexed information to the network device 102.

Optionally, all HARQ-ACK feedback information included in the first HARQ-ACK codebook is a default value.

Optionally, the optional implementation of step S2202 may refer to the relevant optional implementation of step S2102.

In some embodiments, when the time domain location of the channel containing the first HARQ-ACK codebook overlaps with the time domain location of the first uplink channel, the terminal 101 may multiplex the first HARQ-ACK codebook with the information of the first uplink channel, and multiplex them into the same channel to transmit the multiplexed or combined uplink information.

In some embodiments, the default value is acknowledgment (ACK) or negative acknowledgment (NACK).

Optionally, the first HARQ-ACK codebook includes one or more HARQ-ACK feedback information, and the one or more HARQ-ACK feedback information respectively corresponds to one or more SPS PDSCHs whose time domain locations are located in the DTX inactive period in a cell. For example, the first HARQ-ACK codebook includes n HARQ-ACK feedback information, and the *n* HARQ-ACK feedback information are all ACK or NACK.

In some embodiments, the default value may be defined by a protocol or configured by the network device 102.

In some embodiments, the network device 102 receives the multiplexed information.

Optionally, the multiplexed information includes a default value, and the network device 102 can evaluate the channel condition for sending the multiplexed information based on the known default value, so as to more accurately demodulate other information in the multiplexed information other than the default value.

The method involved in the embodiment of the present disclosure may include at least one of step S2201 to step S2202. For example, step S2202 can be implemented as an independent embodiment, but is not limited thereto.

In some embodiments, reference may be made to other optional implementations recorded before or after the specification corresponding to FIG. 2b.

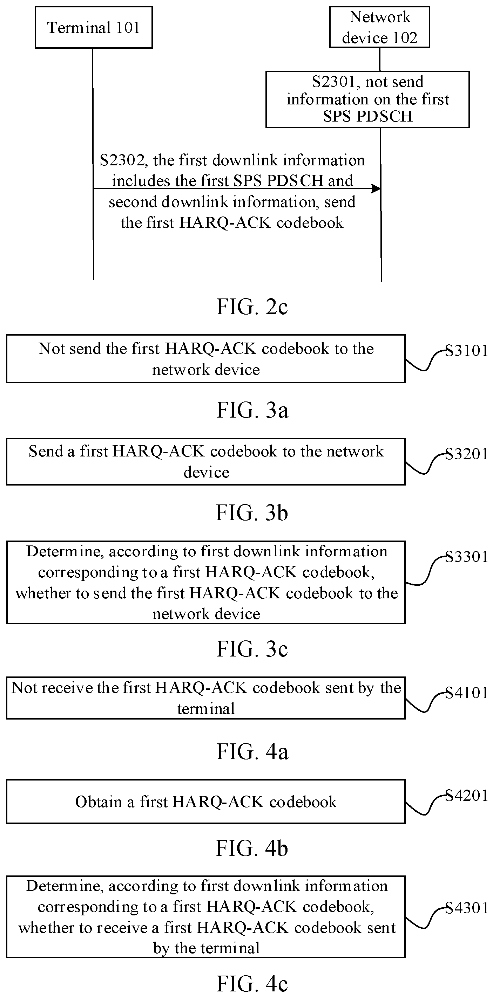

FIG. 2c is an interactive schematic diagram of a communication processing method according to an embodiment of the present disclosure. As shown in FIG. 2c, an embodiment of the present disclosure relates to a communication processing method, and the method includes the following steps.

In **step S2301,** the network device 102 does not send information on the first SPS PDSCH.

Optionally, the optional implementation of step S2301 can refer to step S2101 in FIG. 2a and other related parts in the embodiment involved in FIG. 2a, which are not elaborated here.

In **step S2302,** the first downlink information includes the first SPS PDSCH and second downlink information, the terminal 101 sends the first HARQ-ACK codebook to the network device 102.

In some embodiments, the first downlink information includes not only the first SPS PDSCH, but also other downlink channel(s) other than the first SPS PDSCH.

Optionally, the first HARQ-ACK codebook includes HARQ-ACK feedback information corresponding to the first SPS PDSCH, and HARQ-ACK feedback information corresponding to the second downlink information.

Optionally, the second downlink information includes at least one of the following:
one or more SPS PDSCHs located outside the inactive period in time domain;
a dynamically scheduled PDSCH;
DCI requiring HARQ-ACK feedback.

For example, the second downlink information is one or more SPS PDSCHs whose time domain locations are in the DTX active period, and the one or more SPS PDSCHs require the terminal 101 to perform HARQ-ACK feedback.

For another example, the second downlink information is a dynamically scheduled PDSCH, and the PDSCH requires the terminal 101 to perform HARQ-ACK feedback.

Optionally, the DCI may be a DCI indicating an SPS PDSCH release, or a DCI indicating a joint transmission configuration indication (TCI).

In one embodiment, in the first HARQ-ACK codebook sent by the terminal 101, all HARQ-ACK feedback information corresponding to the first SPS PDSCH are default values.

Optionally, the default value is ACK or NACK.

In this embodiment, if the time domain location of the channel containing the first HARQ-ACK codebook is within the inactive period of DRX in the cell, the terminal 101 still needs to send the first HARQ-ACK codebook.

Optionally, the first HARQ-ACK codebook includes a default value, and the network device 102 can evaluate the channel condition for sending the first HARQ-ACK codebook according to the known default value, so as to more accurately demodulate other feedback information other than the default value in the first HARQ-ACK codebook.

Optionally, if the time domain location of the channel containing the first HARQ-ACK codebook is within the active period of DRX in the cell, the terminal 101 also needs to send the first HARQ-ACK codebook normally.

In this embodiment, if the time domain location of the channel containing the first HARQ-ACK codebook overlaps with the time domain location of the first uplink channel, the terminal 101 may send the first HARQ-ACK codebook in a multiplexing manner, for example:
the terminal 101 multiplexes the first HARQ-ACK codebook with the information of the first uplink channel, and sends the multiplexed information to the network device 102.

Optionally, the first uplink channel includes at least one of the following: a channel for transmitting SR, a channel for transmitting CSI report, a dynamically scheduled PUSCH, and a CG-PUSCH.

In another embodiment, in the first HARQ-ACK codebook sent by the terminal 101, all HARQ-ACK feedback information corresponding to the first SPS PDSCH is eliminated, where the first HARQ-ACK codebook type is a second type (Type 2) HARQ-ACK codebook.

Optionally, the HARQ-ACK codebook types include the following three types: a first type (Type 1) HARQ-ACK codebook, also known as a semi-static HARQ-ACK codebook; a second type (Type 2) HARQ-ACK codebook, also known as a dynamic HARQ-ACK codebook; and a third type (Type 3) HARQ-ACK codebook, also known as a one-shot HARQ-ACK codebook.

The codebook sizes of the Type 1 HARQ-ACK codebook and the Type 3 HARQ-ACK codebook are relatively fixed. The codebook size of the Type 1 HARQ-ACK codebook is related to the number of PDSCHs that require HARQ-ACK feedback in a specific window, and the codebook size of the Type 3 HARQ-ACK codebook is related to the maximum number of HARQ processes configured for the network device 102.

The codebook size of the Type 2 HARQ-ACK codebook can change dynamically and can be determined by the user equipment 101 according to the scheduling situation.

In this embodiment, when the first HARQ-ACK codebook type is the Type 2 HARQ-ACK codebook, the terminal 101 can eliminate all HARQ-ACK feedback information corresponding to the first SPS PDSCH in the first HARQ-ACK codebook, and send the first HARQ-ACK codebook with a smaller codebook size.

In this embodiment, the time domain location of the channel containing the first HARQ-ACK codebook is within the inactive period of DRX in the cell, the terminal 101 still needs to send the first HARQ-ACK codebook.

Optionally, if the time domain location of the channel containing the first HARQ-ACK codebook is within the active period of DRX in the cell, the terminal 101 also needs to send the first HARQ-ACK codebook normally.

In this embodiment, the terminal 101 may still send the first HARQ-ACK codebook in a multiplexing manner, such as multiplexing the first HARQ-ACK codebook with the information of the first uplink channel, and sending the multiplexed information to the network device 102.

In some embodiments, the network device 102 receives a first HARQ-ACK codebook.

The method involved in the embodiment of the present disclosure may include at least one of step S2301 to step S2302. For example, step S2302 may be implemented as an independent embodiment, but is not limited thereto.

In some embodiments, reference may be made to other optional implementations recorded before or after the specification corresponding to FIG. 2c.

FIG. 3a is a schematic diagram of a communication processing method according to an embodiment of the present disclosure. As shown in FIG. 3a, the embodiment of the present disclosure relates to a communication processing method, which is executed by the terminal 101, and the method includes the following step.

In **step S3101,** the terminal 101 does not send the first HARQ-ACK codebook to the network device 102.

Optionally, when the first downlink information only includes the first SPS PDSCH, the optional implementations of step S3101 can refer to step S2102 in FIG. 2a and other related parts in the embodiment involved in FIG. 2a, which will not be repeated here.

In some embodiments, reference may be made to other optional implementations recorded before or after the specification corresponding to FIG. 3a.

FIG. 3b is a schematic diagram of a communication processing method according to an embodiment of the present disclosure. As shown in FIG. 3b, the embodiment of the present disclosure relates to a communication processing method, which is executed by a terminal 101, and the method includes the following step.

In **step S3201,** the terminal 101 sends a first HARQ-ACK codebook to the network device 102.

In some embodiments, optional implementations of step S3201 may refer to step S2202 in FIG. 2b and other related parts of the embodiment involved in FIG. 2b, which will not be described in detail here.

In some embodiments, optional implementations of step S3201 may refer to step S2302 in FIG. 2c and other related parts of the embodiment involved in FIG. 2c, which will not be described in detail here.

In some embodiments, reference may be made to other optional implementations recorded before or after the specification corresponding to FIG. 3b.

FIG. 3c is a schematic diagram of a communication processing method according to an embodiment of the present disclosure. As shown in FIG. 3c, the embodiment of the present disclosure relates to a communication processing method, which is executed by a terminal 101, and the method includes the following step.

In **step S3301,** the terminal 101 determines, according to the first downlink information corresponding to the first HARQ-ACK codebook, whether to send the first HARQ-ACK codebook to the network device 102.

In some embodiments, optional implementations of step S3301 may refer to other related parts of the embodiments involved in step S2102 in FIG. 2a, step S2202 in FIG. 2b, or step S2302 in FIG. 2c, which will not be repeated here.

Optionally, the first downlink information includes a first SPS PDSCH, and the first SPS PDSCH includes one or more SPS PDSCHs whose time domain locations are within the DTX inactive period in a cell.

In some embodiments, if the first downlink information only includes the first SPS PDSCH, the terminal does not send the first HARQ-ACK codebook to the network device.

Optionally, the time domain location of the channel containing the first HARQ-ACK codebook is within the inactive period of DRX in the cell.

In some embodiments, if the first downlink information only includes the first SPS PDSCH, and the time domain location of the channel containing the first HARQ-ACK codebook overlaps with the time domain location of the first uplink channel, the terminal multiplexes the first HARQ-ACK codebook with the information of the first uplink channel, and sends the multiplexed information to the network device; where all HARQ-ACK feedback information contained in the first HARQ-ACK codebook are default values.

In some embodiments, if the first downlink information only includes the first SPS PDSCH, and the time domain location of the channel containing the first HARQ-ACK codebook overlaps with the time domain location of the first uplink channel, the terminal does not multiplex the first HARQ-ACK codebook with the information of the first uplink channel, and does not send the first HARQ-ACK codebook to the network device.

In some embodiments, if the first downlink information includes the first SPS PDSCH and second downlink information, the terminal sends a first HARQ-ACK codebook to the network device.

Optionally, all HARQ-ACK feedback information corresponding to the first SPS PDSCH in the first HARQ-ACK codebook are default values.

Optionally, all HARQ-ACK feedback information corresponding to the first SPS PDSCH in the first HARQ-ACK codebook is eliminated, where the first HARQ-ACK codebook type is the Type 2 HARQ-ACK codebook.

Optionally, the time domain location of the channel containing the first HARQ-ACK codebook is within the inactive period of DRX in the cell.

Optionally, the terminal sends a first HARQ-ACK codebook to the network device, including:
the time domain location of the channel containing the first HARQ-ACK codebook overlaps with the time domain location of the first uplink channel, the terminal multiplexes the first HARQ-ACK codebook and the information of the first uplink channel, and sends the multiplexed information to the network device.

In some embodiments, the second downlink information includes at least one of the following:
one or more SPS PDSCHs located outside the inactive period in time domain;
a dynamically scheduled PDSCH;
DCI requiring HARQ-ACK feedback.

In some embodiments, the first uplink channel includes at least one of the following:
a channel for transmitting SR;
a channel for transmitting CSI reports;
a dynamically scheduled PUSCH;
a CG-PUSCH.

In some embodiments, the default value is acknowledgment (ACK) or negative acknowledgment (NACK).

In some embodiments, reference may be made to other optional implementations recorded before or after the specification corresponding to FIG. 3c.

FIG. 4a is a schematic diagram of a communication processing method according to an embodiment of the present disclosure. As shown in FIG. 4a, the embodiment of the present disclosure relates to a communication processing method, which is executed by a network device 102, and the method includes the following step.

In **step S4101,** the network device 102 does not receive the first HARQ-ACK codebook sent by the terminal 101.

Optionally, when the first downlink information only includes the first SPS PDSCH, the optional implementations of step S4101 can refer to step S2102 in FIG. 2a and other related parts in the embodiment involved in FIG. 2a, which will not be repeated here.

In some embodiments, reference may be made to other optional implementations recorded before or after the description corresponding to FIG. 4a.

FIG. 4b is a schematic diagram of a communication processing method according to an embodiment of the present disclosure. As shown in FIG. 4b, the embodiment of the present disclosure relates to a communication processing method, which is executed by a network device 102, and the method includes the following step.

**In step S4201,** the network device 102 obtains a first HARQ-ACK codebook.

In some embodiments, optional implementations of step S4201 may refer to step S2202 in FIG. 2b and other related parts of the embodiment involved in FIG. 2b, which will not be described in detail here.

In some embodiments, optional implementations of step S4201 may refer to step S2302 in FIG. 2c and other related parts of the embodiment involved in FIG. 2c, which will not be described in detail here.

In some embodiments, reference may be made to other optional implementations recorded before or after the specification corresponding to FIG. 4b.

FIG. 4c is a schematic diagram of a communication processing method according to an embodiment of the present disclosure. As shown in FIG. 4c, the present disclosure embodiment relates to a communication processing method, which is executed by the network device 102, and the method includes the following step.

**In step S4301,** the network device 102 determines, according to first downlink information corresponding to a first HARQ-ACK codebook, whether to receive a first HARQ-ACK codebook sent by the terminal 101.

In some embodiments, optional implementations of step S3301 may refer to other related parts of the embodiments involved in step S2102 in FIG. 2a, step S2202 in FIG. 2b, or step S2302 in FIG. 2c, which will not be repeated here.

Optionally, the first downlink information includes a first SPS PDSCH, and the first SPS PDSCH includes one or more SPS PDSCHs whose time domain locations are within the DTX inactive period in a cell.

In some embodiments, if the first downlink information only includes the first SPS PDSCH, the network device does not receive the first HARQ-ACK codebook sent by the terminal.

Optionally, the time domain location of the channel containing the first HARQ-ACK codebook is within the inactive period of DRX in the cell.

In some embodiments, if the first downlink information only includes the first SPS PDSCH, and the time domain location of the channel containing the first HARQ-ACK codebook overlaps with the time domain location of the first uplink channel, the network device receives the information after the terminal multiplexes the first HARQ-ACK codebook with the information of the first uplink channel; where all HARQ-ACK feedback information contained in the first HARQ-ACK codebook are default values.

In some embodiments, if the first downlink information only includes the first SPS PDSCH, and the time domain location of the channel containing the first HARQ-ACK codebook overlaps with the time domain location of the first uplink channel, the network device does not receive the first HARQ-ACK codebook.

In some embodiments, if the first downlink information includes a first SPS PDSCH and second downlink information, the network device receives a first HARQ-ACK codebook sent by the terminal.

Optionally, all HARQ-ACK feedback information corresponding to the first SPS PDSCH in the first HARQ-ACK codebook are default values.

Optionally, all HARQ-ACK feedback information corresponding to the first SPS PDSCH in the first HARQ-ACK codebook is eliminated, where the first HARQ-ACK codebook type is Type 2 HARQ-ACK codebook.

Optionally, the time domain location of the channel containing the first HARQ-ACK codebook is within the inactive period of DRX in the cell.

Optionally, the time domain location of the channel containing the first HARQ-ACK codebook overlaps with the time domain location of the first uplink channel, and the network device receives information after the terminal multiplexes the first HARQ-ACK codebook and the information of the first uplink channel.

In some embodiments, the second downlink information includes at least one of the following:
one or more SPS PDSCHs located outside the inactive period in time domain;
a dynamically scheduled PDSCH;
DCI requiring HARQ-ACK feedback.

In some embodiments, the first uplink channel includes at least one of the following:
a channel for transmitting SR;
a channel for transmitting CSI reports;
a dynamically scheduled PUSCH;
a CG-PUSCH.

In some embodiments, the default value is ACK or NACK.

The communication processing method provided by the embodiment of the present disclosure proposes a method for UE to perform HARQ-ACK feedback on SPS PDSCH when the base station applies the DTX function. Some examples are listed below.

### Example 1:

If the first HARQ-ACK codebook corresponds only to the HARQ-ACK feedback information of SPS PDSCH (one or more), and all SPS PDSCHs are located in the DTX inactive period in a cell, the UE sends the first HARQ-ACK codebook in one of the following ways.
(1) The UE does not send the first HARQ-ACK codebook.
(2) If the time domain location of the first HARQ-ACK codebook falls into the inactive period of DRX in the cell, the UE does not send the first HARQ-ACK codebook.
(3) If the first HARQ-ACK codebook overlaps with other uplink channel(s) in the time domain, the UE considers that each HARQ-ACK information in the first HARQ-ACK codebook is NACK or ACK, and multiplexes the first HARQ-ACK codebook with other uplink channel(s).

Optionally, if the channel where the HARQ-ACK is located has time domain overlap with other uplink channel(s), it is necessary to multiplex the HARQ-ACK and the information of other uplink channel(s) and multiplex them into the same channel to transmit the combined uplink information.

(4) If the first HARQ-ACK codebook has time domain overlap with other uplink channel(s), the UE considers that the first HARQ-ACK codebook does not exist, that is, the first HARQ-ACK codebook is kicked out of the uplink channel multiplexing process, and the first HARQ-ACK codebook is not multiplexed with other uplink channel(s).

Optionally, other uplink channel(s) includes a PUCCH for transmitting SR or CSI report, a dynamically scheduled PUSCH, or a CG-PUSCH.

### Example 2:

It is provided that the first HARQ-ACK codebook corresponds to HARQ-ACK information of other channel (s) in addition to HARQ-ACK feedback information of (one or more) SPS PDSCH located in the DTX inactive period in a cell; where the other channel(s) may include: SPS PDSCH (one or more) not located in the DTX inactive period in a cell, dynamically scheduled PDSCH, and DCI requiring HARQ-ACK feedback (for example, DCI indicating SPS PDSCH release or DCI indicating joint TCI).

The UE considers that the HARQ-ACK feedback information corresponding to the SPS PDSCH (one or more) in the DTX inactive period in a cell in the first HARQ-ACK codebook is all ACK or all NACK, and sends the first HARQ-ACK codebook in one of the following ways.
(1) The UE sends the first HARQ-ACK codebook.
(2) If the time domain location of the first HARQ-ACK codebook falls into the inactive period of DRX in the cell, the UE still needs to send the first HARQ-ACK codebook.
(3) If the first HARQ-ACK codebook overlaps with other uplink channel(s) in the time domain, the UE multiplexes the first HARQ-ACK codebook with the other uplink channel(s).

### Example 3:

It is provided that the first HARQ-ACK codebook corresponds to HARQ-ACK information of other channel(s) in addition to HARQ-ACK feedback information of SPS PDSCH (one or more) located in the DTX inactive period in a cell; where the other channel(s) may include: SPS PDSCH (one or more) not located in the DTX inactive period in a cell, dynamically scheduled PDSCH, and DCI requiring HARQ-ACK feedback (for example, DCI indicating SPS PDSCH release or DCI indicating joint TCI).

In the case where Type 2 HARQ-ACK codebook is configured, the UE does not send the HARQ-ACK feedback information of the SPS PDSCH (one or more) in the DTX inactive period in a cell, that is, in the first HARQ-ACK codebook, the HARQ-ACK feedback information of the SPS PDSCH (one or more) in the DTX inactive period in a cell is eliminated, and only the HARQ-ACK information of other channel(s) is included.

After elimination, the first HARQ-ACK codebook is sent in one of the following ways.
(1) The UE sends the first HARQ-ACK codebook.
(2) If the time domain location of the first HARQ-ACK codebook falls into the inactive period of DRX in the cell, the UE still needs to send the first HARQ-ACK codebook.
(3) If the first HARQ-ACK codebook overlaps with other uplink channel(s) in the time domain, the UE multiplexes the first HARQ-ACK codebook with the other uplink channel(s).

The embodiments of the present disclosure also propose an apparatus for implementing any of the above methods, for example, an apparatus is proposed, the above apparatus includes a unit or module for implementing each step performed by the terminal in any of the above methods. For another example, another apparatus is also proposed, including a unit or module for implementing each step performed by a network device (such as an access network device, a core network function node, a core network device, etc.) in any of the above methods.

It should be understood that the division of the units or modules in the above apparatus is only a division of logical functions, which can be fully or partially integrated into one physical entity or physically separated in actual implementation. In addition, the units or modules in the apparatus can be implemented in the form of a processor calling software: for example, the apparatus includes a processor, the processor is connected to a memory, instructions are stored in the memory, and the processor calls the instructions stored in the memory to implement any of the above methods or implement the functions of the units or modules of the above apparatus, where the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be implemented by designing the hardware circuits. The hardware circuits may be understood as one or more processors; for example, in one implementation, the hardware circuits are application-specific integrated circuits (ASICs), and the functions of some or all of the above units or modules may be implemented by designing the logical relationship of the components in the circuits; for another example, in another implementation, the hardware circuits may be implemented by programmable logic devices (PLDs), and Field Programmable Gate Arrays (FPGAs) may be used as an example, which may include a large number of logic gate circuits, and the connection relationship between the logic gate circuits may be configured by configuring the configuration files, thereby implementing the functions of some or all of the above units or modules. All units or modules of the above apparatus may be implemented in the form of software called by the processor, or in the form of hardware circuits, or in the form of software called by the processor, and the remaining part may be implemented in the form of hardware circuits.

In the embodiments of the present disclosure, the processor is a circuit with signal processing capability. In one implementation, the processor may be a circuit with instruction reading and execution capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which can be understood as ASIC, such as Neural Network Processing Unit (NPU), Tensor Processing Unit (TPU), Deep Learning Processing Unit (DPU), etc.

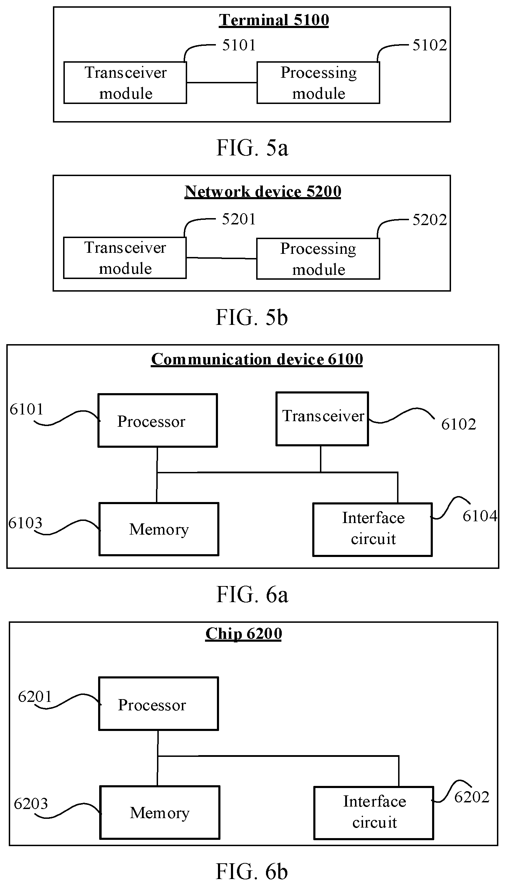

FIG. 5a is a schematic diagram of a structure of the terminal proposed in an embodiment of the present disclosure. As shown in FIG. 5a, the terminal 5100 may include: at least one of a transceiver module 5101, a processing module 5102, etc. In some embodiments, the processing module 5102 is configured to determine, according to the first downlink information corresponding to the first hybrid automatic repeat request acknowledge (HARQ-ACK) codebook, whether to send the first HARQ-ACK codebook to the network device; where the first downlink information includes a first semi-persistent scheduling physical downlink shared channel (SPS PDSCH), and the first SPS PDSCH includes one or more SPS PDSCHs whose time domain locations are located in a discontinuous transmission (cell DTX) inactive period in a cell.

Optionally, the transceiver module 5101 is configured to execute at least one of the communication steps such as sending and/or receiving executed by the terminal 101 in any of the above methods, which will not be described in detail here. Optionally, the processing module is configured to execute at least one of the other steps executed by the terminal 101 in any of the above methods, which will not be described in detail here.

FIG. 5b is a schematic diagram of the structure of a network device proposed in an embodiment of the present disclosure. As shown in FIG. 5b, the network device 5200 may include: at least one of a transceiver module 5201, a processing module 5202, etc. In some embodiments, the processing module 5202 is configured to determine, according to the first downlink information corresponding to the first HARQ-ACK codebook, whether to receive the first HARQ-ACK codebook sent by the terminal; where the first downlink information includes a first SPS PDSCH, and the first SPS PDSCH includes one or more SPS PDSCHs whose time domain locations are located within the DTX inactive period in a cell.

Optionally, the transceiver module 5201 is configured to execute at least one of the communication steps such as sending and/or receiving executed by the network device 102 in any of the above methods, which will not be described in detail here. Optionally, the processing module is configured to execute at least one of the other steps executed by the network device 102 in any of the above methods, which will not be described in detail here.

In some embodiments, the transceiver module may include a sending module and/or a receiving module, and the sending module and the receiving module may be separate or integrated. Optionally, the transceiver module may be replaced with the transceiver.

In some embodiments, the processing module can be one module or include multiple submodules. Optionally, the multiple submodules respectively execute all or part of the steps required to be executed by the processing module. Optionally, the processing module can be replaced with the processor.

FIG. 6a is a schematic diagram of the structure of a communication device 6100 proposed in an embodiment of the present disclosure. The communication device 6100 may be a network device (e.g., an access network device, a core network device, etc.), or a terminal (e.g., a user device, etc.), or a chip, a chip system, or a processor that supports a network device to implement any of the above methods, or a chip, a chip system, or a processor that supports a terminal to implement any of the above methods. The communication device 6100 may be used to implement the method described in the above method embodiments, and the details may refer to the description in the above method embodiments.

As shown in FIG. 6a, the communication device 6100 includes one or more processors 6101. The processor 6101 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute a program, and process the data of the program. Optionally, the communication device 6100 is configured to execute any of the above methods. Optionally, one or more processors 6101 are configured to call instructions so that the communication device 6100 executes any of the above methods.

In some embodiments, the communication device 6100 further includes one or more transceivers 6102. When the communication device 6100 includes one or more transceivers 6102, the transceiver 6102 performs at least one of the communication steps such as sending and/or receiving in the above method, and the processor 6101 performs at least one of the other steps. In an optional embodiment, the transceiver may include a receiver and/or a transmitter, and the receiver and the transmitter may be separated or integrated. Optionally, the terms such as transceiver, transceiver unit, transceiver machine, transceiver circuit, interface circuit, interface, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

In some embodiments, the communication device 6100 further includes one or more memories 6103 for storing data. Optionally, all or part of the memories 6103 may also be outside the communication device 6100. In an optional embodiment, the communication device 6100 may include one or more interface circuits 6104. Optionally, the interface circuit 6104 is connected to the memory 6102, and the interface circuit 6104 may be used to receive data from the memory 6102 or other apparatuses, and may be used to send data to the memory 6102 or other apparatuses. For example, the interface circuit 6104 may read the data stored in the memory 6102 and send the data to the processor 6101.

The communication device 6100 described in the above embodiments may be a network device or a terminal, but the scope of the communication device 6100 described in the present disclosure is not limited thereto, and the structure of the communication device 6100 may not be limited by FIG. 6a. The communication device may be an independent device or may be part of a relatively large device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

FIG. 6b is a schematic diagram of a structure of a chip 6200 provided in an embodiment of the present disclosure. In the case where the communication device 6100 may be a chip or a chip system, reference may be made to the schematic diagram of the structure of the chip 6200 shown in FIG. 6b, but the present disclosure is not limited thereto.

The chip 6200 includes one or more processors 6201. The chip 6200 is configured to execute any of the above methods.

In some embodiments, the chip 6200 further includes one or more interface circuits 6202. Optionally, the terms interface circuit, interface, transceiver pin, etc. can be interchangeable. In some embodiments, the chip 6200 further includes one or more memories 6203 for storing data. Optionally, all or part of the memory 6203 can be outside the chip 6200. Optionally, the interface circuit 6202 is connected to the memory 6203, and the interface circuit 6202 can be used to receive data from the memory 6203 or other apparatuses, and the interface circuit 6202 can be used to send data to the memory 6203 or other apparatuses. For example, the interface circuit 6202 can read the data stored in the memory 6203 and send the data to the processor 6201.

In some embodiments, the interface circuit 6202 performs at least one of the communication steps such as sending and/or receiving in the above method. The interface circuit 6202 performs the communication steps such as sending and/or receiving in the above method, for example, means that the interface circuit 6202 performs data interaction between the processor 6201, the chip 6200, the memory 6203 or the transceiver device. In some embodiments, the processor 6201 performs at least one of the other steps.

The modules and/or devices described in the embodiments such as virtual devices, physical devices, chips, etc. can be combined or separated as needed. Optionally, some or all steps can also be performed by multiple modules and/or devices in collaboration, which is not limited here.

The present disclosure also proposes a storage medium, on which instructions are stored, and when the instructions are executed on the communication device 6100, the communication device 6100 executes any of the above methods. Optionally, the storage medium is an electronic storage medium. Optionally, the storage medium is a computerreadable storage medium, but is not limited thereto, and it can also be a storage medium readable by other apparatuses. Optionally, the storage medium can be a non-transitory storage medium, but is not limited thereto, and it can also be a temporary storage medium.

The present disclosure also proposes a program product, which, when executed by the communication device 6100, enables the communication device 6100 to execute any of the above methods. Optionally, the program product is a computer program product.

The present disclosure also proposes a computer program, which, when executed on a computer, causes the computer to execute any one of the above methods.

### Industrial Applicability

In the methods of the present disclosure, the terminal determines whether to send the first HARQ-ACK codebook corresponding to the first downlink information, that is, the first HARQ-ACK codebook including the HARQ-ACK feedback information of the first downlink information, according to the inclusion relationship between the first downlink information and the first SPS PDSCH. Thus, when the first SPS PDSCH is located in the DTX inactive period in a cell of the network device, the terminal can reasonably adjust the sending manner of the relevant first HARQ-ACK codebook to perform reasonable sending and receiving behavior during the energy-saving period of the network device.

## Claims

1. A communication processing method, the method comprising:
determining, by a terminal, according to first downlink information corresponding to a first hybrid automatic repeat request acknowledge (HARQ-ACK) codebook, whether to send the first HARQ-ACK codebook to a network device;
wherein the first downlink information comprises a first semi-persistent scheduling physical downlink shared channel (SPS PDSCH), and the first SPS PDSCH comprises one or more SPS PDSCHs whose time domain locations are located within a discontinuous transmission (cell DTX) inactive period in a cell.

2. The method according to claim 1, wherein determining, by the terminal, according to the first downlink information corresponding to the first HARQ-ACK codebook, whether to send the first HARQ-ACK codebook to the network device, comprises:
the first downlink information only comprising the first SPS PDSCH, not sending, by the terminal, the first HARQ-ACK codebook to the network device.

3. The method according to claim 2, wherein
a time domain location of a channel containing the first HARQ-ACK codebook is within an inactive period of discontinuous reception (DRX) in the cell.

4. The method according to claim 1, wherein determining, by the terminal, according to the first downlink information corresponding to the first HARQ-ACK codebook, whether to send the first HARQ-ACK codebook to the network device, comprises:
the first downlink information only comprising the first SPS PDSCH, and a time domain location of a channel containing the first HARQ-ACK codebook overlapping with a time domain location of a first uplink channel, the terminal multiplexing the first HARQ-ACK codebook with information of the first uplink channel, and sending the multiplexed information to the network device;
wherein all HARQ-ACK feedback information comprised in the first HARQ-ACK codebook is a default value.

5. The method according to claim 1, wherein determining, by the terminal, according to the first downlink information corresponding to the first HARQ-ACK codebook, whether to send the first HARQ-ACK codebook to the network device, comprises:
the first downlink information only comprising the first SPS PDSCH, and a time domain location of a channel containing the first HARQ-ACK codebook overlapping with a time domain location of a first uplink channel, the terminal not multiplexing the first HARQ-ACK codebook with information of the first uplink channel, and not sending the first HARQ-ACK codebook to the network device.

6. The method according to claim 1, wherein determining, by the terminal, according to the first downlink information corresponding to the first HARQ-ACK codebook, whether to send the first HARQ-ACK codebook to the network device, comprises:
the first downlink information comprising the first SPS PDSCH and second downlink information, the terminal sending the first HARQ-ACK codebook to the network device.

7. The method according to claim 6, wherein
all HARQ-ACK feedback information corresponding to the first SPS PDSCH in the first HARQ-ACK codebook is a default value.

8. The method according to claim 6, wherein
all HARQ-ACK feedback information corresponding to the first SPS PDSCH in the first HARQ-ACK codebook is eliminated, wherein a type of the first HARQ-ACK codebook is a Type 2 HARQ-ACK codebook.

9. The method according to claim 7 or 8, wherein
a time domain location of a channel containing the first HARQ-ACK codebook is within an inactive period of DRX in the cell.

10. The method according to claim 7 or 8, wherein sending, by the terminal, the first HARQ-ACK codebook to the network device, comprises:
a time domain location of a channel containing the first HARQ-ACK codebook overlapping with a time domain location of a first uplink channel, the terminal multiplexing the first HARQ-ACK codebook with information of the first uplink channel, and sending the multiplexed information to the network device.

11. The method according to claim 6, wherein the second downlink information comprises at least one of:
one or more SPS PDSCHs located outside the inactive period in time domain;
dynamically scheduled physical downlink shared channel (PDSCH);
downlink control information (DCI) requiring HARQ-ACK feedback.

12. The method according to claim 4 or 7, wherein
the default value is an acknowledgment (ACK) or a negative acknowledgment (NACK).

13. A communication processing method, the method comprising:
determining, by a network device, according to first downlink information corresponding to a first HARQ-ACK codebook, whether to receive the first HARQ-ACK codebook sent by a terminal;
wherein the first downlink information comprises a first SPS PDSCH, and the first SPS PDSCH comprises one or more SPS PDSCHs whose time domain locations are located within a DTX inactive period in a cell.

14. The method according to claim 13, wherein determining, by the network device, according to the first downlink information corresponding to the first HARQ-ACK codebook, whether to receive the first HARQ-ACK codebook sent by the terminal, comprises:
the first downlink information only comprising the first SPS PDSCH, not receiving, by the network device, the first HARQ-ACK codebook sent by the terminal.

15. The method according to claim 14, wherein
a time domain location of a channel containing the first HARQ-ACK codebook is within an inactive period of DRX in the cell.

16. The method according to claim 13, wherein determining, by the network device, according to the first downlink information corresponding to the first HARQ-ACK codebook, whether to receive the first HARQ-ACK codebook sent by the terminal, comprises:
the first downlink information only comprising the first SPS PDSCH, and a time domain location of a channel containing the first HARQ-ACK codebook overlapping with a time domain location of a first uplink channel, receiving, by the network device, information obtained by the terminal multiplexing the first HARQ-ACK codebook with information of the first uplink channel;
wherein all HARQ-ACK feedback information comprised in the first HARQ-ACK codebook is a default value.

17. The method according to claim 13, wherein determining, by the network device, according to the first downlink information corresponding to the first HARQ-ACK codebook, whether to receive the first HARQ-ACK codebook sent by the terminal, comprises:
the first downlink information only comprising the first SPS PDSCH, and a time domain location of a channel containing the first HARQ-ACK codebook overlapping with a time domain location of a first uplink channel, not receiving, by the network device, the first HARQ-ACK codebook.

18. The method according to claim 13, wherein determining, by the network device, according to the first downlink information corresponding to the first HARQ-ACK codebook, whether to receive the first HARQ-ACK codebook sent by the terminal, comprises:
the first downlink information comprising the first SPS PDSCH and second downlink information, receiving, by the network device, the first HARQ-ACK codebook sent by the terminal.

19. The method according to claim 18, wherein
all HARQ-ACK feedback information corresponding to the first SPS PDSCH in the first HARQ-ACK codebook is a default value.

20. The method according to claim 18, wherein
all HARQ-ACK feedback information corresponding to the first SPS PDSCH in the first HARQ-ACK codebook is eliminated, wherein a type of the first HARQ-ACK codebook is a Type 2 HARQ-ACK codebook.

21. The method according to claim 19 or 20, wherein
a time domain location of a channel containing the first HARQ-ACK codebook is within an inactive period of DRX in the cell.

22. The method according to claim 19 or 20, wherein receiving, by the network device, the first HARQ-ACK codebook sent by the terminal, comprises:
a time domain location of a channel containing the first HARQ-ACK codebook overlapping with a time domain location of a first uplink channel, receiving, by the network device, information obtained by the terminal multiplexing the first HARQ-ACK codebook with information of the first uplink channel.

23. The method according to claim 18, wherein the second downlink information comprises at least one of:
one or more SPS PDSCHs located outside the inactive period in time domain;
a dynamically scheduled PDSCH;
DCI requiring HARQ-ACK feedback.

24. The method according to claim 16 or 19, wherein
the default value is an ACK or a NACK.

25. A terminal, comprising:
a processing module, configured to, according to first downlink information corresponding to a first hybrid automatic repeat request acknowledge (HARQ-ACK) codebook, determine whether to send the first HARQ-ACK codebook to a network device;
wherein the first downlink information comprises a first semi-persistent scheduling physical downlink shared channel (SPS PDSCH), and the first SPS PDSCH comprises one or more SPS PDSCHs whose time domain locations are located within a discontinuous transmission (cell DTX) inactive period in a cell.

26. A network device, comprising:
a processing module, configured to determine, according to first downlink information corresponding to a first HARQ-ACK codebook, whether to receive the first HARQ-ACK codebook sent by a terminal;
wherein the first downlink information comprises a first SPS PDSCH, and the first SPS PDSCH comprises one or more SPS PDSCHs whose time domain locations are located within a DTX inactive period in a cell.

27. A terminal, comprising:
a memory;
one or more processors; and
a computer program stored in the memory and executable on the processor, wherein the processor implements the method according to any one of claims 1 to 12 when executing the computer program.

28. A network device, comprising:
a memory;
one or more processors; and
a computer program stored in the memory and executable on the processor, wherein the processor implements the method according to any one of claims 13 to 24 when executing the computer program.

29. A communication system, comprising a terminal and a network device, wherein
the terminal is configured to implement the communication processing method according to any one of claims 1 to 12; and
the network device is configured to implement the communication processing method according to any one of claims 13 to 24.

30. A storage medium storing instructions, wherein
when the instructions are executed on a communication device, the communication device is caused to execute the method according to any one of claims 1 to 12 or any one of claims 13 to 24.
